# EUROPÄISCHE PATENTSCHRIFT

(11) **EP 3 201 134 B1**
(45) Veröffentlichungstag und Bekanntmachung des Hinweises auf die Patenterteilung: **14.08.2019**
(21) Anmeldenummer: 15734065.4
(22) Anmeldetag: 18.06.2015
(51) Int. Cl.: C01B 33/24, C01D 7/07, C01F 7/20, C01F 7/34, C04B 7/24, C04B 7/06, B01D 11/02, B01J 6/00, B01J 8/00, C22B 1/00

(54) **VERFAHREN ZUR ABTRENNUNG VON ALUMINIUM BEI DER CALCIUMSILIKATPRODUKTION**
METHOD FOR SEPARATING ALUMINUM DURING CALCIUM SILICATE PRODUCTION
PROCÉDÉ POUR SÉPARER L'ALUMINIUM DURANT LA PRODUCTION DE SILICATE DE CALCIUM

(30) Priorität: 29.09.2014 DE 102014114090
(43) Veröffentlichungstag der Anmeldung: 09.08.2017
(73) Patentinhaber: Karlsruher Institut für Technologie, 76131 Karlsruhe (DE)
(72) Erfinder: HUNSINGER, Hans, 76356 Weingarten (DE); GIZIEWICZ, Karolina, 12347 Berlin (DE)
(86) Internationale Anmeldenummer: PCT/EP2015/001236
(87) Internationale Veröffentlichungsnummer: WO 2016/050332

(56) Entgegenhaltungen:
- CN-A- 103 754 905
- US-A- 3 393 975
- US-A- 4 397 822

## Beschreibung

Die Erfindung betrifft ein Verfahren sowie eine Verwendung einer Vorrichtung zur Abtrennung von Aluminium bei der Herstellung von Calciumsilikat aus calcium-, silizium- und aluminiumhaltigen mineralischen Einsatzstoffen umfassend mineralische Roh- und Reststoffe gemäß dem ersten und dem vierzehnten Patentanspruch. Calciumsilikat, bevorzugt Dicalciumsilikat als α- und/oder β-C₂S, dient als hydraulisches Bindemittel oder als Ausgangsstoff zur Herstellung eines hydraulischen Bindemittels. Belit-Zemente, die Dicalciumsilikat enthalten, sind aus der Zementtechnik bekannt.

Die energieeffiziente Herstellung von Calciumsilikat insbesondere mit einem molaren Verhältnis Ca:Si mit einem Wert möglichst nahe bei 2:1 aus leicht zugänglichen Ausgangsstoffen, die Calciumcarbonat CaCO₃ und Siliziumdioxid SiO₂ enthalten, ist in **[1]** beschrieben. Je nach Wahl der Verfahrensparameter CO₂-Partialdruck und Temperatur sowie des Mineralisierungshilfsstoffes lässt sich im Verfahrensprodukt die Ausbeute an Calciumsilikat und insbesondere an α- und β-C₂S einstellen.

Das in **[1]** beschriebene Verfahren zur Herstellung von Dicalciumsilikat erfolgt bei einer Gasatmosphäre mit einem CO₂-Partialdruck P_{CO2} von 0,05 bis 0,2 MPa, vorzugsweise von 0,08 bis 0,12 MPa, und bei Temperaturen von 850 bis 1100 °C, vorzugsweise von 950 bis 1050°C vorzugsweise über eine Zeitdauer von 10 Minuten bis 5 Stunden, besonders bevorzugt innerhalb von 30 bis 60 Minuten. Aluminiumhaltige Einsatzstoffe werden in **[1]** nicht beschrieben.

Beim Einsatz von Calcium-, Silizium- und Aluminiumhaltigen Einsatzstoffen werden bei der Kalzinierung und anschließender hydrothermalen Behandlung mit steigender Aluminiumkonzentration unerwünschte Calcium-Aluminium-Silizium Mineralphasen (insb. Katoit Ca₃Al₂ (SiO₄)_{1.5}(OH)₆ und Hibschit Ca₃Al₂(SiO₄)₂(OH)₄) gebildet, wodurch die Ausbeute am gewünschten Zielprodukt Calciumsilikat insbesondere an Dicalciumsilikat (α- und β-C₂S) sinkt und so die Calciumsilikat-Qualität mindert.

Daher sind Einsatzstoffe im Rahmen der **[1]** mit möglichst niedrigen Al-Konzentrationen vorteilhaft. Viele potentielle Ca- und Si- reiche Roh- und Reststoffe für die Calciumsilikatproduktion weisen jedoch eine erhöhte Al-Konzentration auf. Ein Einsatz von Aluminiumhaltigen Roh- und Reststoffen für die Calciumsilikatproduktion würde die verfügbare Rohstoffbasis erheblich erweitern und eröffnet auch die Möglichkeit ein breites Spektrum an mineralischen Reststoffen für die Produktion von Calciumsilikat zu verwerten.

Aluminium ist auch ein wertvoller Rohstoff für viele Anwendungen, so dass eine selektive Abtrennung von Aluminium als Koppelprodukt bei der Calciumsilikat-Produktion wirtschaftlich interessant sein kann.

Bei Produktionsprozessen mit großen Rohstoffmasseströmen wie bei der Herstellung von zementartigen Bindemitteln ist die Abtrennung von Aluminium selbst bei relativ niedrigen Konzentrationen vom Umfang sehr bedeutend. Voraussetzung ist, dass der zusätzliche Aufwand für die Al-Abtrennung im Verhältnis zum Wert des abgetrennten Al gering ist.

In **[2]** wird z.B. ein Verfahren zur Gewinnung von Aluminium aus Kohleverbrennungsrückständen mit einem lime-soda-Sinterprozess beschrieben, wobei eine Sintertemperatur von 1250 bis 1300°C offenbart wird. Aluminium wird durch Extraktion des Sinterproduktes abgetrennt.

Auch **[4]** offenbart ein Verfahren zur Abtrennung von Al₂O₃ aus Kohlenflugasche, umfassend das Zusetzen von CaCO₃ zu der Kohlenflugasche, kalzinieren bei 1350 bis 1400°C, gefolgt von einer Elution unter Verwendung einer Natriumkarbonatlösung. Es wird Kohlenstoff und Schwefel der Kohlenflugasche vor der Kalzinierung zugesetzt, wobei die Aluminiumoxidausbeute gesteigert wird.

Bei den genannten hohen Sintertemperaturen insbesondere des lime-soda-Sinterprozesses sinkt jedoch insbesondere die Ausbeute an C₂S. Zudem steigen der Energieverbrauch und die thermische und chemische Materialbelastung des Reaktors mit der Temperatur signifikant. Die Zersetzung (Sulfate) und Freisetzung von flüchtigen Inhaltsstoffen der Rohstoffe, insbesondere Metallverbindungen aus Aschen und Schlacken und des zugesetzten Soda (=Natriumcarbonat) steigt mit der Temperatur entsprechend den individuellen Dampfdrücken. Dadurch ist eine effiziente Gasreinigung erforderlich.

Ausgehend hiervon ist es die **Aufgabe der Erfindung,** ein Verfahren und eine Verwendung einer Vorrichtung zur Abtrennung von Aluminium bei der Calciumsilikatproduktion aus Calcium-, Silizium- und Aluminiumhaltigen mineralischen Einsatzstoffen umfassendmineralische Roh- und Reststoffe vorzuschlagen, das sich insbesondere für einen Einsatz in der hydrothermalen Zementherstellung ohne die vorgenannten Einschränkungen eignet.

Eine weitere Aufgabe der Erfindung ist es, das Verfahren sowie die Verwendung einer Vorrichtung zur Calciumsilikat-Produktion, wie in **[1]** beschrieben so zu gestalten, dass auch Al-haltige Einsatzstoffe verarbeitet werden können. Dabei soll insbesondere die Kalzinierung (Sinterung) bei möglichst niedrigen Temperaturen stattfinden.

Die Aufgabe wird mit einem Verfahren und einer Verwendung mit den Merkmalen des ersten bzw. vierzehnten Patentanspruchs gelöst. Auf diese rückbezogenen Unteransprüche geben vorteilhafte Ausgestaltungen wieder.

Es hat sich überraschend gezeigt, dass bei der Calcinierung unter einer hochkonzentrierten CO₂ haltigen Gasatmosphäre im Gegensatz zu Luft oder Stickstoff auch die Aluminiumverbindungen bereits in einem bevorzugten Temperaturbereich zwischen 850 und 1100°C sehr effizient in eine wasserlösliche Form (Alkali-AlO₂) überführt werden.

Dabei werden die Calcium-, Silizium- und Aluminiumhaltigen Einsatzstoffe zerkleinert und mit Alkalicarbonaten, insbesondere Natrium- und/oder Kalium- und/ oder Lithiumcarbonaten vermischt und die Stoffmischung in einer CO₂-haltigen Gasatmosphäre (vorzugsweise mit einem CO₂-Partialdruck zwischen 0,05 und 0,2MPa) mit einer Temperatur von 850 bis 1050°C beaufschlagt.

Es wird insbesondere ein Verfahren zur Abtrennung von Aluminium bei der Calciumsilikatproduktion aus Calcium-, Silizium- und Aluminiumhaltigen mineralischen Einsatzstoffen umfassend mineralische Roh- und Reststoffe vorgeschlagen. Als mineralische Rohstoffe dienen dabei vorzugsweise Granit, Basalt, Sand, Tonminerale, Kalkstein (CaCO₃) und/oder Dolomit, als Reststoffe insbesondere Aschen und Schlacken z.B. aus Verbrennungs- und metallurgischen Prozessen. Mineralische Bauabfälle wie Altbeton oder Porenbeton sind ebenfalls als Einsatzstoffe nutzbar.

In einem ersten Schritt werden die vorgenannten Einsatzstoffe bevorzugt mechanisch, alternativ auch durch Elektroimpulse bevorzugt bis zu einer Partikelgröße kleiner 0,1mm zerkleinert und mit Alkalicarbonaten umfassend Natrium- und / oder Kalium- und/oder Lithiumcarbonat zu einer Stoffmischung vermischt. Dies erfolgt in der Weise, dass sich ein molares Verhältnis von Calcium zu Silizium zwischen 1 zu 1 und 3 zu 1 (vorzugsweise 2 zu 1) und ein molares Verhältnis von Alkalimetall zu Aluminium zwischen 1 zu 1 bis 3 zu 1 einstellt und die Konzentration von Alkalicarbonaten in der Stoffmischung dabei mindestens 2% beträgt.

Es folgt eine Kalzinierung der Stoffmischung bei 850 bis 1050°C, vorzugsweise über 900°C und/oder unter 1050°C, wobei ein kalziniertes Produkt aus wasserunlöslichen Calciumsilikaten und wasserlöslichen Aluminiumverbindungen gebildet wird. Wesentlich ist, dass die Kalzinierung in einer CO₂-haltigen Gasatmosphäre stattfindet, nämlich bei einem CO₂-Partialdruck zwischen 0,05 und 0,2MPa. Diese Gasatmosphäre ermöglicht in vorteilhafter Weise nicht nur eine Absenkung der für die Kalzinierung erforderlichen Reaktionstemperatur auf das vorgenannte Temperaturintervall in einer vorgenannten Höhe sondern erhöht auch die Ausbeute für eine Calciumsilikat- insbesondere für eine C₂S Bildung und Synthese von wasserlöslichen Alkalialuminiumverbindungen insbesondere NaAlO₂ und KAlO₂ und ermöglicht so eine Verwertung aluminiumhaltiger mineralischer Roh- und Reststoffe. In Luft- oder Stickstoffatmosphäre ist die Calciumsilikatausbeute und insbesondere die C₂S-Ausbeute niedrig, und es findet nahezu keine Bildung von wasserlöslichen Al-Verbindungen statt.

Bei Einsatzstoffen, die organischen und/oder elementaren Kohlenstoff und/oder Schwefel enthalten, ist ein geringer O₂-Partialdruck (beispielsweise 0,001 bis 0,2 bar) in der Kalzinierungsgasatmosphäre zur Vermeidung von CO und SO₂-Bildung und Freisetzung vorteilhaft. Die Calciumsilikat Ausbeute und Al-Abtrennung wird dadurch nur geringfügig vermindert. Das Calcium zu Silizium Verhältnis der Rohstoffmischung liegt dabei im vorgenannten Bereich. Für die Calciumsilikat-Synthese und Al-Abtrennung, wird ein Mineralisierungshilfsstoff vorzugsweise (z.B. Na₂CO₃ und/oder K₂CO₃) zugegeben. Besonders effizient für die C₂S Bildung ist der Zusatz von 2 bis 10% Na₂CO₃ und/oder K₂CO₃ (Summe Na₂CO₃ + K₂CO₃) vorzugsweise 5% und für die Reaktion von Al-Verbindungen zu wasserlöslichen Alkalialuminiumverbindungen ein molares (vorgenanntes) Verhältnis Natrium plus Kalium (= Alkali) zu Aluminium von 1 bis 3 vorzugsweise 1,5 bis 2, 5.

Ein wesentlicher Verfahrensschritt ist eine erste wässrige Elution des kalzinierten Produkts (unter Bildung von NaAl(OH)₄)

NaAlO₂ + 2 H₂O → NaAl(OH)₄ (1)

KAlO₂ + 2 H₂O → KAl(OH)₄ (2)

mit flüssigem Wasser oder einer flüssigen wässrigen Alkalihydroxid- und/oder einer flüssigen Alkalicarbonatlösung (wie z.B. NaOH-, KOH- bzw. Na₂CO₃, K₂CO₃ Lösung oder Mischungen daraus) in einem Temperaturbereich zwischen 0 und 100°C, vorzugsweise 20 bis 60°C, bei dem Wasser unter einem bevorzugten Umgebungsdruck die flüssige Phase aufweist. Eine bevorzugte technische Realisierung erfolgt über eine Nasswaschstufe z. B. Rührkessel. Dabei geht Aluminium als Alkali-Aluminate in Lösung. Es folgt eine Fest-Flüssigtrennung in eine Alkali-Al(OH)₄-reiche Lösung und einen restalkalihaltigen calciumsilikatreichen Feststoff sowie anschließend eine Ausfällung und Abtrennung von Aluminium-Hydroxid Al(OH)₃ aus der Alkali-Al(OH)₄-reichen Lösung durch Zugabe von Impfkristallen und/oder durch Zugabe von CO₂ oder eines CO₂-haltigen Gases. Nach Abtrennung des ausgefällten Aluminium-Hydroxids Al(OH)₃ durch eine Fest-Flüssigtrennung verbleiben die gebildeten Alkalihydroxide oder Alkalicarbonate in der wässrigen Phase und können nach (möglichst vollständiger Carbonatisierung) in einem Trocknungsprozess zurückgewonnen und optional als Mineralisator wieder eingesetzt werden.

Die vorgenannte erste Elution (Kaltelution) erweitert das in **[1]** beschriebene Verfahren um einen zusätzlichen Verfahrensschritt, den die kalzinierten Aluminiumhaltigen mineralischen Produkte durchlaufen müssen. Zudem lassen sich auch Schwefelhaltige mineralische Abfälle schadlos verwerten, wenn bei der Elution (erste, aber auch nachfolgend beschriebene zweite Elution) störende oder für das Endprodukt unzulässige chemische schwefelhaltige Verbindungen insbesondere Sulfide durch Zugabe von Sauerstoff in unproblematischere Sulfate umgesetzt werden.

Eine mögliche Ausgestaltung des Verfahrens sieht eine der ersten Elution nachfolgende zweite Elution vor, bei der der die erste Elution passierende wasserunlösliche restalkalihaltige Calciumsilikatreiche Feststoff (wasserunlösliches Calciumsilikat aus der Kalzinierung) mit Wasser oder einer wässrigen Alkalihydroxid-Lösung bei einer erhöhten Temperatur zwischen 100 und 250°C, vorzugsweise bei 180 bis 220°C eluiert werden, wobei Alkalihydroxide gebildet werden und in Lösung gehen. Die zweite Elution erfolgt vorzugsweise in einem Autoklaven. Es folgt eine Fest-Flüssigtrennung z.B. mittels Filtration, Zentrifuge, Hydrozyklon oder Sedimentation der zur Abtrennung einer alkalihydroxidreichen wässrigen Lösung und eines alkaliarmen calciumsilikatreichen Feststoffs, wofür eine Abkühlung des Wassers oder der wässrigen Alkalihydroxid-Lösung, d.h. bevorzugt auf 0 bis 100°C vorteilhaft ist (insbesondere für Filtration, wegen Beständigkeit des Filtertuches gegenüber Alkalihydroxid).

Die vorgenannte zweite Elution erfolgt bei einer Temperatur zwischen 100 und 250°C mit flüssigem Wasser oder einer flüssigen wässrigen Alkalihydroxid-Lösung unter einem entsprechenden Dampfdruck. Eine Umsetzung der Alkaliverbindungen in eine wasserlösliche Form ist auch mit Sattdampf durchführbar, allerdings müssen die gebildeten wasserlöslichen Alkaliverbindungen nachträglich in einem weiteren zusätzlichen Verfahrensschritt mit flüssigem Wasser ausgewaschen werden.

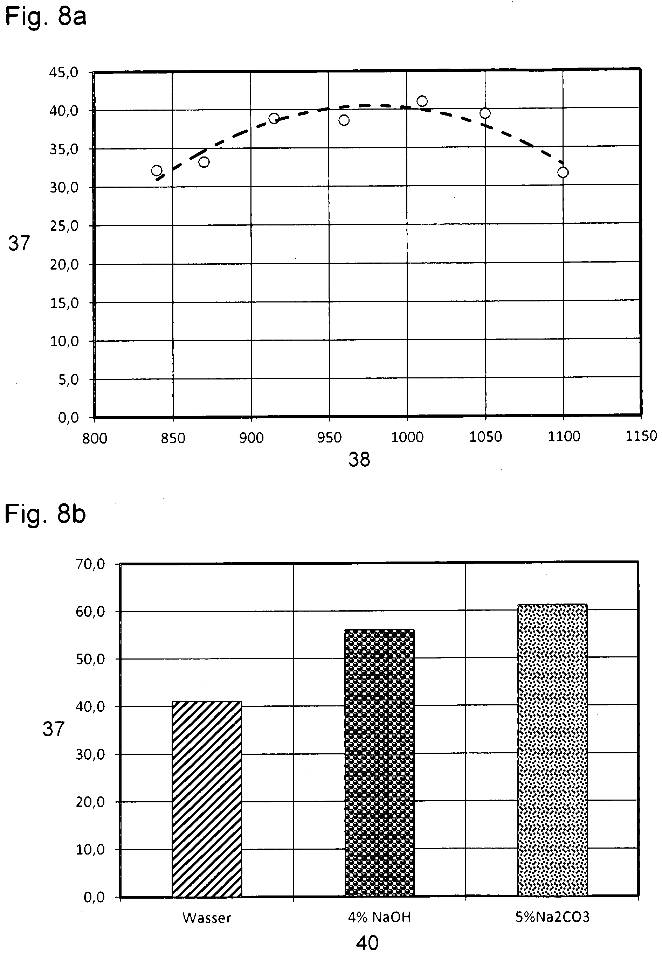

Vorzugsweise wird bei vorgenannter Ausgestaltung eine Einleitung der abgetrennten und zwischen 0 und 100°C temperierten wässrigen Alkalihydroxidlösung (aus der zweiten Elutionsstufe) oder eines Teils desselben in die erste Elutionsstufe vorgesehen. Alternativ oder ergänzend umfasst das Verfahren bevorzugt eine weiteren Verfahrensschritt mit einer vollständigen oder partiellen Carbonatisierung der Alkalihydroxidlösung oder eines Teils desselben mit einem CO₂-haltigen Gas zu einer Alkalicarbonatlösung. Weiter bevorzugt erfolgt anschließend eine Einleitung dieser Alkalikarbonat-Lösung oder eines Teils derselben als flüssige wässrige Lösung in die erste Elution. Alkalihydroxid und Alkalicarbonat erhöht die Al-Elutionsausbeute (vgl. **Fig.8b**). Es ist zu beachten, dass bei Alkalihydroxidkonzentrationen größer 5% in der ersten Elution wasserlösliche Alkalisilikate gebildet werden können und so die Selektivität der Aluminiumabtrennung vermindert wird und dadurch gegebenenfalls eine Siliziumabscheidung (z. B. mit Ca(OH)₂) erforderlich sein kann.

Bei alkalihaltigen Einsatzstoffen (Na, K, Li, Rb) ist auch eine selektive Abtrennung der einzelnen Alkalispezies und Verwertung aus der Heißelutionsstufe möglich. Überschüsse z.B. beim Einsatz von Einsatzstoffen mit sehr hohen Alkaligehalten können aufgearbeitet (z.B. Abtrennung von Lithium bei Lithiumhaltigen Einsatzstoffen) und extern vermarktet werden.

Eine weitere Ausgestaltung sieht eine Carbonatisierung der Alkalihydroxidlösung unter einem CO₂-haltigen Gas und Sprühtrocknung oder Sprühtrocknung der Alkalikarbonatlösung, und Abscheidung von festen Alkalikarbonat-partikel vor. Diese sind in vorteilhafter Weise wieder als Mineralisator für die Kalzinierung einsetzbar. Der Einsatz von externem Mineralisator kann so vermindert oder ganz ersetzt werden.

Eine weitere Ausgestaltung sieht vor, das bei der Kalzinierung gebildete heiße CO₂ oder CO₂-haltige Gas zur Al-Ausfällung und/ oder Carbonatisierung und/oder Sprühtrocknung oder auch für Kalzinierung zu nutzen.

Eine weitere Ausgestaltung umfassend jeweils Anreicherungsrezyklierungskreisläufe in der ersten und/oder zweiten Elution zur energetischen Optimierung der jeweiligen Trocknungsprozesse.

Grundvoraussetzung für einen wirtschaftlichen Betrieb ist es, dass große Massenströme von wertstoffhaltigen Roh- oder Reststoffen in einem vorhandener Produktionsprozess verarbeitet werden und dieser Prozess nur leicht modifiziert oder erweitert werden muss, so dass eine Mertstoffabtrennung mit geringem Mehraufwand möglich ist. Dies ist im Rahmen beispielsweise der in **[1]** vorgeschlagenen Lösung dadurch gegeben, dass dem dort offenbarten Verfahren der Kalzinierungsschritt um mindestens die erste Niedertemperaturelution erweitert werden muss. Vorteilhaft ist insbesondere auch die Möglichkeit zur stofflichen Verwertung von mineralischen Abfallstoffen (Flugaschen und Schlacken) über den Niedertemperatur Kalzinierungsvorgang unter einer Gasatmosphäre mit hohem CO₂-Gehalt mit nachfolgender selektiver Wertstoffelution.

Grundsätzlich eignet sich das Verfahren auch zur Anreicherung und Abtrennung auch von anderen in den Einsatzstoffen niedrig konzentrierten Wertstoffen wie z.B. Kalium, Lithium oder auch Rubidium.

Das erfindungsgemäße Verfahren weist insbesondere die folgenden Vorteile auf:
Das erfindungsgemäße Verfahren erlaubt insbesondere die energieeffiziente Herstellung von Calciumsilikat (bevorzugtes molares Verhältnis Ca:Si von 2:1) aus Ausgangsstoffen, die Calciumcarbonat CaCO₃ und Siliziumdioxid SiO₂ enthalten. Je nach Wahl der Verfahrensparameter CO₂-Partialdruck und Temperatur sowie des Mineralisierungshilfsstoffes lässt sich im Verfahrensprodukt die Ausbeute an α'_{L}- und β-C₂S einstellen. Zugleich erlaubt das Verfahren die wirtschaftliche Abtrennung von Aluminium und/oder Alkalien, ohne dabei in den Kalzinierungsprozess für die Calciumsilikatherstellung eingreifen zu müssen. Das mit dem erfindungsgemäßen Verfahren hergestellte und von Aluminium oder Alkalien abgereicherte Produkt zeigt dann eine unverminderte hohe Qualität. Das mit diesem Verfahren gewonnene Calciumsilikat eignet sich insbesondere als Einsatzmaterial für das Verfahren gemäß (vgl. **[3]**).

Die Erfindung umfasst auch eine Verwendung einer Vorrichtung zur Durchführung des Verfahrens sowie eine Verwendung dieser Vorrichtung zur Abtrennung von Wertstoffen, insbesondere Aluminium. Die Vorrichtung umfasst insbesondere mindestens einen Elutionsreaktor (Rührkessel) oder Autoklaven pro Elutionsstufe, Mühlen für die Zerkleinerung und Mischung sowie mindestens ein Reaktor für die Kalzinierung.

Das Verfahren eignet sich insbesondere als Erweiterung des in **[1]** offenbarten Verfahrens zur C₂S-Produktion für die hydrothermale Herstellung eines zementären Bindemittels, da die abgetrennten Elemente und Verbindungen bei der eigentlichen nachfolgenden Bindemittelherstellung stören oder keine signifikante Rolle spielen.

Alternativ lässt sich das Verfahren zur stofflichen Verwertung, und zur Gewinnung von Wertstoffen auch von mineralischen Abfallstoffen wie Flugaschen oder Schlacken nutzen.

Die Erfindung wird im Folgenden anhand von Ausführungsbeispielen und Figuren näher erläutert. Die dabei beschriebenen beispielhaften Ausgestaltungsdetails werden dabei beispielhaft an bestimmten Ausführungsbeispielen beschrieben, ohne auf diese beschränkt zu sein. Vielmehr dienen sie dabei der Anschauung und Erläuterung und sind im Rahmen der Erfindung grundsätzlich miteinander auch in anderen Ausführungsbeispielen kombinierbar. Es zeigen
**Fig.1** ein Ablaufschema des Verfahrens einer Ausführungsform mit nur einer ersten Elution und einer Fällungsstufe für in der ersten Elution gewonnenes NaAl(OH)₄ und/oder KAl(OH)₄ gemäß Formeln (1) und (2) (Verfahrenskonzept: einstufige Elution),
**Fig.2** ein Ablaufschema des Verfahrens einer weiteren Ausführungsform mit einer ersten und einer der ersten folgenden zweiten Elution sowie einer Fällungsstufe gemäß **Fig.1** (Verfahrenskonzept: getrennte Elution),
**Fig.3** ein Ablaufschema des Verfahrens einer weiteren Ausführungsform mit zwei Elutionstufen gemäß **Fig.2****,** umfassend eine Rezyklierung der in der zweiten Elution abgeschiedenen wässrigen Alkalihydroxidlösung in die erste Elutionsstufe (Verfahrenskonzept: Gegenstrom Elution),
**Fig.4** ein Ablaufschema des Verfahrens einer weiteren Ausführungsform, umfassend eine vollständige oder partielle Carbonatisierung der in der zweiten Elution abgeschiedenen Alkalihydroxid-reichen Lösung zu einer alkalicarbonathaltigen Lösung und Einleitung dieser in die erste Elution (Verfahrenskonzept: Gegenstrom Elution mit Carbonatisierung),
**Fig.5** ein Ablaufschema des Verfahrens einer weiteren Ausführungsform, umfassend Stufen für eine Sprühtrocknung und Carbonatisierung der Alkalihydroxid- und/oder Alkalikarbonatlösung, für eine Abscheidung von trockenen festen Alkalikarbonatpartikel sowie für eine Rezyklierung der festen Alkalikarbonate als Mineralisator für die Kalzinierung (Verfahrenskonzept: getrennte Elution mit Al-Abtrennung und Mineralisatorrückgewinnung),
**Fig.6** ein Ablaufschema des Verfahrens einer weiteren Ausführungsform gemäß **Fig.5****,** weiter umfassend eine Carbonatisierung der in der zweiten Elution abgetrennten Hydroxide (Verfahrenskonzept: getrennte Elution mit Aluminiumabtrennung und Mineralisatorrückgewinnung),
**Fig.7a** **und b** jeweils eine graphische Darstellung des Einflusses der Gasatmosphäre während der Kalzinierung einer Basalt/Kalksteinmischung mit Ca/Si=2 und 5% Na₂CO₃ als Mineralisator, Kalziniert bei 1000°C und die anschließende Elution von Aluminium, Natrium und Kalium bei 22°C **(a)** und 70°C **(b)** mit Wasser,
**Fig.8a** eine graphische Darstellung des Einflusses der Kalzinierungstemperatur (Granit/Kalksteinmischung mit Ca/Si=2 und 5% Na₂CO₃ als Mineralisator, **Fig.8a**) mit Wasser als Elutionslösung auf die Aluminiumelutionsrate (Elution in [%]),
**Fig.8b** den Einfluss der wässrigen Elutionslösungen Wasser, 4% NaOH und 5% Na₂CO₃ auf die Aluminiumelutionsrate (Elution in [%]) (einer Granit/Kalksteinmischung mit Ca/Si=2 und 5% Na₂CO₃ als Mineralisator, kalziniert bei 1000°C unter CO₂ Atmosphäre) sowie
**Fig.9a** **bis d** jeweils eine graphische Darstellung des Einflusses der Elutionstemperatur auf die Ausbeute von Aluminium **(a),** Natrium **(b),** Kalium **(c)** und Lithium **(d)** (im Beispiel Granit/Kalksteinmischung mit Ca/Si=2 und 5% Na₂CO₃ als Mineralisator, kalziniert bei 1000°C unter CO₂ Atmosphäre, Elution mit Wasser als Elutionsmittel, Wasser zu Feststoffverhältnis W/F von 10 zu 1).

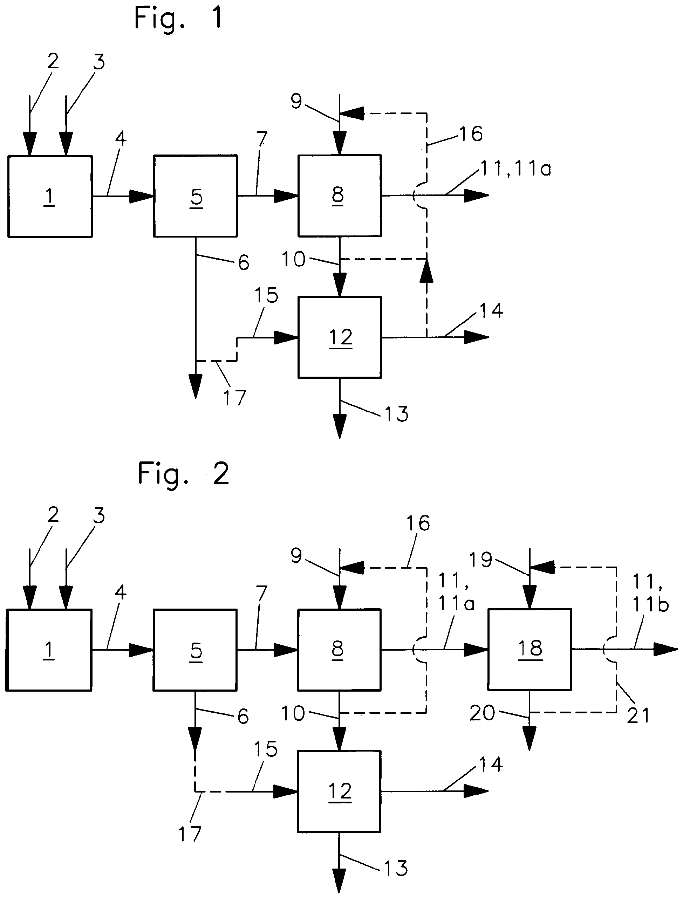

Das Verfahren zur Abtrennung von Aluminium bei der Calciumsilikatproduktion aus Calcium-, Silizium- und Aluminiumhaltigen mineralischen Einsatzstoffen umfassend mineralische Roh- und Reststoffe umfasst in jeden Fall die in **Fig.1** dargestellten Verfahrensschritte. In einem ersten Mischungs- und Zerkleinerungsschritt **1** werden Natrium- und/oder Kalium- und/oder Lithiumcarbonat als Mineralisatorhilfsmittel **2** und Calcium-, Silizium- und Aluminiumhaltige mineralischen Roh- oder Reststoffe **3** zu einer Stoffmischung **4** gemischt und zerkleinert. Über die Zugabe der Roh- und Reststoffe erfolgt eine Einstellung eines Mischungsverhältnises, wobei ein molares Verhältnis Calcium/Silizium zwischen 1/1 und 3/1 (vorzugsweise 2/1) und ein molares Verhältnis Alkalimetall/Aluminium auf 1/1 bis 3/1 eingestellt wird und dabei die Konzentration von Alkalicarbonaten in der Stoffmischung mindestens 2% (bezogen auf die gesamte Stoffmischungsmasse) beträgt.

Die Stoffmischung **4** wird einer Kalzinierung **5** als zweiten Verfahrensschritt zugeführt. Die Kalzinierung, erfolgt in einer Gasatmosphäre mit einem CO₂-Partialdruck im Rahmen der dargestellten Ausführung zwischen 0,05 und 0,2MPa bei 850 bis 1100°C, wobei bei einer CO₂-Freisetzung **6** ein kalziniertes Produkt **7** aus wasserunlöslichen Calciumsilikaten und wasserlöslichen Aluminiumverbindungen gebildet wird.

In einem dritten Verfahrensschritt erfolgt eine erste Elution **8** des kalzinierten Produkts **7** mit flüssigen Wasser **9** oder einer flüssigen wässrigen Alkalihydroxid- und/oder Alkalicarbonatlösung im Temperaturbereich vorzugsweise zwischen 0 und 100°C. Bei der ersten Elution werden Alkali-Aluminate (Alkali-Al(OH)₄) gebildet und gehen in Lösung und werden im Rahmen einer vorzugsweise im Rahmen der ersten Elution stattfindenden Fest-Flüssigtrennung als eine Alkali-Al(OH)₄-reiche Lösung **10** von dem aluminiumabgereicherten calciumsilikatreichen Feststoff **11** getrennt und ausgeleitet. Nach Verlassen der ersten Elution (und vor Eintritt in eine optionale nachfolgende zweite Elution) verbleiben jedoch noch Reste an Alkalien wie Natrium, Kalium oder Lithium im calciumsilikatreichen Feststoff **11,** d.h. jener ist zunächst ein (rest-)alkalihaltiger calciumsilikatreicher Feststoff **11a.** Die Alkali-Al(OH)₄-reiche Lösung **10** wird zu einer Ausfällung **12** zu-geleitet. Im Rahmen der Ausfällung erfolgt eine Abtrennung von Aluminium-Hydroxid Al(OH)₃ **13** aus der Alkali-Al(OH)₄-reichen Lösung durch Zugabe von Impfkristallen (Al(OH)₃) und/oder durch Zugabe von CO₂ **15** oder eines CO₂-haltigen Gases, wobei Aluminiumhydroxid ausfällt und abgeführt **13** wird. Die verbleibende Alkalicarbonat-haltige wässrige Lösung **14** wird abgeführt. Durch Trocknung ist festes Alkalikarbonat gewinnbar.

**Fig.1** zeigt auch beispielhaft für alle Ausführungen anwendbar einen optionalen Anreicherungsrezyklierungskreislauf **16** (dargestellt als gestrichelte Linie) für die erste Elution **8,** bei der die Eingabe von flüssigem Wasser **9** oder einer flüssigen wässrigen Alkalihydroxid und/oder Alkalicarbonatlösung ganz oder teilweise durch einen Teil der Alkali-Al(OH)₄-reichen Lösung **10** erfolgt. Ebenso lässt sich anstelle oder ergänzend von der vorgenannten Alkali-Al(OH)₄-reichen Lösung **10** auch die verbleibende alkalihydroxid und/oder alkalicarbonathaltige wässrige Lösung **14** in die erste Elution rezyklieren (vgl. **Fig.1****,** dargestellt als gestrichelte Linie). Beim erneuten Durchlaufen der ersten Elution erfolgt - sofern die Lösung noch nicht gesättigt, d.h. noch aufnahmefähig ist - eine erneute Aufnahme von Alkali-Aluminaten (Alkali-Al(OH)₄) in der Lösung.

**Fig.1** zeigt auch beispielhaft für alle Ausführungen anwendbar eine optionale Nutzung eines Teilstroms des bei der Kalzinierung **5** freigesetzten CO₂ **6** für die Ausfällung **12.** Diese erfolgt mittels einer Überleitung **17** (dargestellt als gestrichelte Linie) zwischen Kalzinierung und Ausfällung.

Alle in **Fig.1** dargestellten Merkmale sind auch in **Fig.2** dargestellt. **Fig.2** zeigt eine Ausführungsform mit ergänzter zweiter Elution **18,** in die der aluminiumabgereicherte restalkalihaltige calciumsilikatreiche Feststoff **11a** aus der ersten Elution **8** eingeleitet wird, d.h. die zweite Elution ist verfahrenstechnisch der ersten Elution folgend. Im Rahmen der zweiten Elution **18** erfolgt eine Alkalielution des restalkalihaltigen calciumsilikatreichen Feststoffes **11a** mit Wasser **19** oder einer wässrigen Alkalihydroxid-Lösung bei einer Temperatur vorzugsweise zwischen 100 und 250°C (vorzugsweise unter einem Druck entsprechend der Wasserdampfdruckkurve oder größer bei Zugabe eines weiteren Gases z.B. Sauerstoff) wobei Alkalien aus dem restalkalihaltigen calciumsilikatreiche Feststoff **11a** als Hydroxide in Lösung gehen und in einer alkalihydroxidreichen Lösung **20,** (Na, K, Li)OH abgeleitet werden, während ein restlicher aluminium- und alkaliabgereicherter calciumsilikatreicher Feststoff **11b** die zweite Elution verlässt. Nach Verlassen der zweiten Elution ist der restalkalihaltige calciumsilikatreiche Feststoff **11a** zu einem alkaliarmen calciumsilikatreichen Feststoff **11b** aufbereitet.

Die zweite Elution stellt somit einen weiteren Zwischenschritt für den aluminiumabgereicherten und alkaliarmen calciumsilikatreichen Feststoff **11b** nach der Kalzinierung und nach der Aluminiumabtrennungsstufe und vor der Zementproduktion dar. Wie bei der ersten Elution zeigt **Fig.2** beispielhaft für alle Ausgestaltungen einen optionalen Anreicherungsrezyklierungskreislauf **21** (dargestellt als gestrichelte Linie) für eine zyklische Alkalihydroxidanreicherung in der wässrigen Lösung **20.**

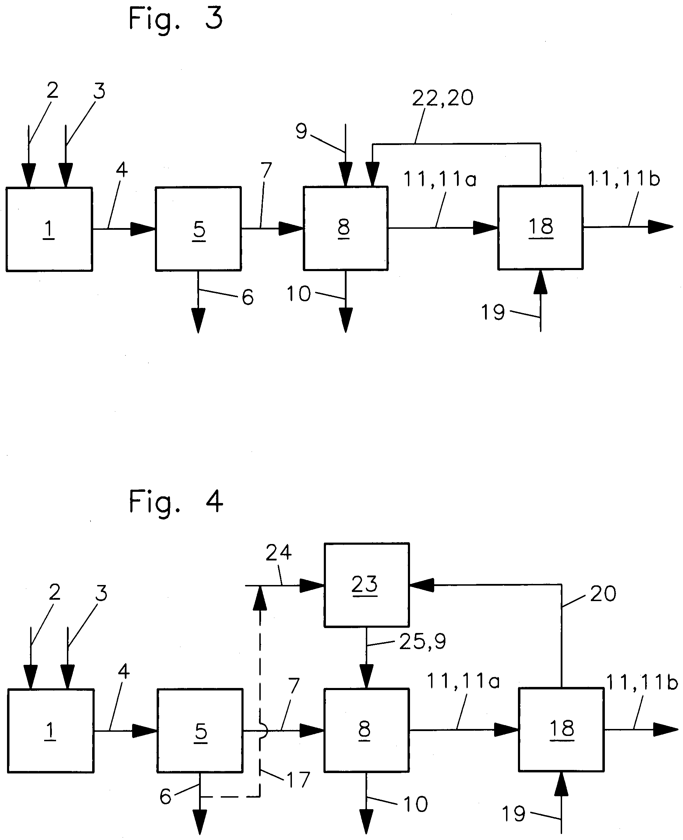

**Fig.3** zeigt eine beispielhafte Ausgestaltung einer Weiterleitung der in der zweiten Elution **18** gewonnenen Alkalihydroxidlösung **20** wie (Na, K, Li)OH in die erste Elution **8.** Die aus der zweiten Elution entnommene Hydroxidlösung **20** oder ein Teil derselben wird in die erste Elution **8** rezykliert und ersetzt oder ergänzt dort die Eingabe von flüssigem Wasser **9** oder einer flüssigen wässrigen Alkalihydroxid- und/oder Alkalicarbonatlösung. Die Rezyklierung erfolgt in einer Rezyklierungsleitung **22.** In dieser wird die Alkalihydroxidlösung **20** mittels einer Fest-Flüssigtrennung zur Abtrennung einer alkalihydroxidreichen wässrigen Lösung und eines alkaliarmen calciumsilikatreichen Feststoffs gereinigt sowie auf eine Temperatur entsprechend dem flüssigem Wasser **9** oder der flüssigen wässrigen Alkalihydroxid- und/oder Alkalicarbonatlösung auf 0 bis 100°C temperiert (Abkühlung). Dies erfolgt vorzugsweise in der Reihenfolge Temperierung mit nachfolgender Fest-Flüssigtrennung, wobei weiter bevorzugt die Temperierung gemeinsam mit dem flüssigen Wasser **9** oder einer flüssigen wässrigen Alkalihydroxid- und/oder Alkalicarbonatlösung erfolgt, beispielsweise mit einer Vorvermischung zu einer gemeinsamen Weiterleitung in die erste Elution.

Die in **Fig.3** dargestellte Rezyklierung hat den Vorteil der Betriebsstoffersparnis und der besseren Energieeffizienz, da dasselbe Wasser **19** oder dieselbe wässrige Alkalihydroxid-Lösung nicht nur zur Aufnahme von Hydroxiden aus der zweiten Elution, sondern auch von Alkali-Aluminaten (Alkali-Al(OH)₄) aus der ersten Elution heranziehbar ist. Dabei ist in besonders vorteilhafter Weise die hohe Lösungskapazität beider Stoffe nutzbar.

**Fig.4** zeigt eine Ausgestaltung, bei der die in der zweiten Elutionsstufe **18** entnommene Hydroxidlösung **20,** vorzugsweise eine Alkalihydroxid-reiche Lösung einer vollständigen oder partiellen Carbonatisierung **23** zugeführt wird. Die Alkalihydroxid-reiche Lösung (öder Hydroxidlösung) oder ein Teil desselben wird dabei mit CO₂ **24** oder einem CO₂-haltigen Gas zu einer alkalicarbonathaltigen Lösung **25** vollständig oder teilweise umgesetzt und anschließend vorzugsweise in die erste Elution **8** anstelle oder in Ergänzung zu dem flüssigen Wasser **9** oder der flüssigen wässrigen Alkalihydroxid- und/oder Alkalicarbonatlösung eingegeben. Eine optionale Überleitung **17** ermöglicht die Nutzung des während der Kalzinierung **5** entstehenden Kohlendioxids **6.**

In **Fig.3** und **4** nicht explizit dargestellt, aber vorzugsweise vorgesehen ist die der ersten Elution nachfolgende Ausfällung **12** (vgl. **Fig.1** und **2**) für die Alkali-Al(OH)₄-reiche Lösung aus der ersten Elution.

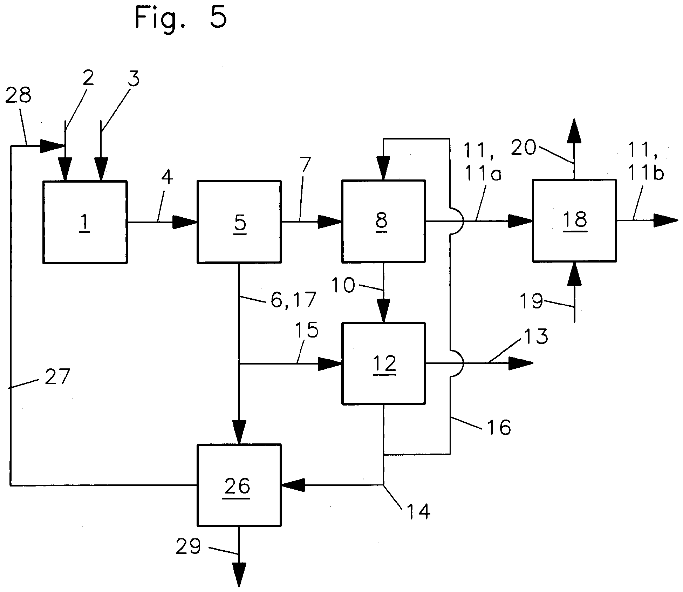

**Fig.5** zeigt ein Ablaufschema des Verfahrens einer weiteren Ausführungsform. Diese umfasst eine Stufe **26** für eine Carbonatisierung und Sprühtrocknung der Alkalihydroxid- und/oder Alkalikarbonatlösung, die zudem eine weitere Stufe für eine Abscheidung von trockenen festen Alkalikarbonatpartikel integral enthält. Ferner ist für eine Rezyklierung der festen Alkalikarbonate als Mineralisator für die Kalzinierung eine Rezyklierungsleitung **27** von der vorgenannten Stufe **26** in die Zufuhrleitung von Mineralisator **2** vorgesehen. Im Rahmen dieser Ausführungsform werden die in der Ausfällung **12** (vgl. u.A. **Fig.1** und **2**) ausgeschiedene alkalihydroxid- und/oder alkalicarbonathaltige Lösung (Na,K,Li)₂CO₃ **14** vollständig oder teilweise einer Sprühtrockung **26** zugeführt. Die Sprühtrocknung erfolgt unter CO₂ oder unter einem CO₂-haltigen Gas, wobei der CO₂-Anteil wie auch vorzugsweise bei Ausfällung **12** vorzugsweise durch die CO₂-Freisetzung in der Kalzinierung gebildet wird und über eine Verbindungsleitung **17** der Sprühtrocknung zugeführt wird. Bei der Carbonatisierung und Sprühtrocknung der Alkalihydroxid- und/oder Alkalikarbonatlösung in einem CO₂-haltigen Gas entstehen trockene feste Alkalikarbonatpartikel **28** ((Na,K,Li)₂CO₃-Partikel). Diese werden mit einem Partikelabscheider (Filter) abgeschieden, und über die Rezyklierungsleitung **27** in die Rohstoffmischung (Mühle) weitergeleitet. Dadurch wird in vorteilhafter Weise ein externer Mineralisator ersetzbar (Kostenersparnis). Die Alkalikarbonate dienen als Mineralisator für die Kalzinierung der Stoffmischung **4.** Ferner weist die Stufe für die Sprühtrocknung und Carbonatisierung der Alkalihydroxid- und/oder Alkalikarbonatlösung **26** eine Ausleitung für CO₂ **29** auf. Überschüssiges CO₂ wird stofflich genutzt oder durch CCS entsorgt.

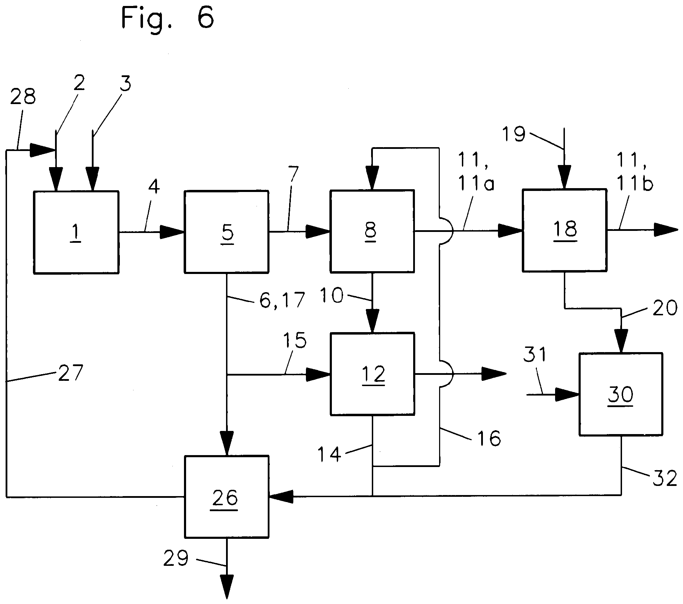

**Fig.6** zeigt die in **Fig.5** dargestellte Anordnung, ergänzt durch eine Carbonatisierung **30** für die Hydroxidlösung (Na,K,Li)OH **20** aus der zweiten Elution unter CO₂-Zufuhr **31** (oder eines CO₂-haltigen Gases). Dabei bildet sich eine carbonathaltige Lösung **32** (Na, K, Li)₂CO₃, die gemeinsam mit der aus der Al-Ausfällung abgeschiedenen Lösung **14** der Sprühtrocknung **26** zugeführt wird. In vorteilhafter Weise werden die in der zweiten Elution ausgeschiedene Hydroxidlösung 20 im Prozess weiter genutzt und bildet eine Alternative zu der vorgenannten und in **Fig.3** und **4** vorgeschlagenen Rezyklierung.

Die Zusammensetzungen von beispielhaften mineralischen Rohstoffen als Ausgangsstoffe für die Calciumsilikatproduktion wurden chemisch analysiert. In **Tab.1 und 2** sind hierzu beispielhaft jeweils die chemischen Zusammensetzungen von verschiedenen aluminiumhaltigen siliziumreichen Einsatzstoffen wie Sanden (sowie von Granit, Basalt und Bims, Steinkohleasche und Kupferschlacke **(Tab.1)** dargestellt, die sich alle für eine anschließende Bindemittelproduktion als geeignet erwiesen haben. Aluminiumhaltige calciumreiche Roh- und Reststoffe sind in **Tab.2** dargestellt. Durch Mischen von siliziumreichen **(Tab.1)** und calciumreichen **(Tab.2)** Roh- und Reststoffen wird das geforderte Ca/Si-verhältnis (Ca/Si= 1,0 bis 3, vorzugsweise Ca/Si=2) eingestellt.

**Tab.1: Aluminiumhaltige Siliziumreiche Roh-und Reststoffe**

| | Gew. | Granit | Basalt | Bims | Steinkohleasche | Kupferschlacke | Flusssand 1 | Flusssand 2 | Quarzmeh 1 |
|---|---|---|---|---|---|---|---|---|---|
| Si | % | 32.70 | 20.40 | 26.20 | 27.12 | 43.52 | 39.50 | 40.72 | 45.69 |
| Ca | % | 1.34 | 7.77 | 0.67 | 2.14 | 11.49 | 1.67 | 1.00 | 0.01 |
| **Al** | % | **8.09** | **6.58** | **11.10** | **10.40** | **5.91** | **3.13** | **2.70** | **0.29** |
| Mg | % | 0.49 | 7.53 | 0.16 | 0.87 | 3.65 | 0.15 | 0.13 | 0.01 |
| K | % | 3.57 | 1.16 | 4.44 | 1.37 | 2.46 | 1.98 | 1.75 | 0.09 |
| Na | % | 2.65 | 1.83 | 6.31 | 1.10 | 0.45 | 0.83 | 0.72 | 0.01 |
| Fe | % | 1.58 | 8.12 | 1.59 | 6.45 | 9.01 | 0.45 | 0.37 | 0.01 |

**Tab.2: Aluminiumhaltige Calciumreiche Roh- und Reststoffe**

| | Gew. | Kalkstein 1 | Kalkstein 2 | Kalkstein 3 | Kalkstein 4 | Kalkstein 5 | Holzasche | Braunkohle -asche |
|---|---|---|---|---|---|---|---|---|
| Si | % | 3.63 | 2.74 | 1.34 | 3.49 | 2.44 | 1.03 | 8.08 |
| Ca | % | 35.70 | 36.20 | 40.00 | 35.90 | 39.70 | 32.80 | 25.90 |
| **Al** | % | **1.17** | **1.08** | **0.44** | **1.47** | **0.52** | **0.44** | **1.82** |
| Mg | % | 0.70 | 1.61 | 0.34 | 0.64 | 0.26 | 2.12 | 6.03 |
| Na | % | 0.03 | 0.06 | 0.03 | 0.15 | 0.02 | 0.15 | 1.79 |
| K | % | 0.50 | 0.52 | 0.15 | 0.77 | 0.13 | 7.14 | 0.35 |
| Fe | % | 0.66 | 0.63 | 0.27 | 0.80 | 0.32 | 0.13 | 10.50 |

Die in **Tab.1 und 2** dargestellten Roh- und Reststoffe wiesen einen hohen Unterschied im Anteil von Aluminium, Natrium und Kalium auf. Insbesondere weisen die in **Tab.1** genannten Ausgangsstoffe Granit, Basalt, Bims und Steinkohleasche sehr hohe Konzentrationen an Aluminium auf, die für die anschließende Bindemittelproduktion nicht erwünscht sind und für eine Abtrennung nach einem der vorgenannten Verfahren, insbesondere einer der vorgenannten (ersten und/oder zweiten) Elutionen zur Verfügung steht. Der in den Einsatzstoffen teilweise recht hohe Gehalt an Alkalien kann in vorteilhafter Weise die externe Mineralisatorzufuhr reduzieren oder sogar vollständig ersetzen. Eine Ausgestaltung sieht vor, das aus den Rohstoffen abgetrennte Natrium und Kalium nach Carbonatisierung als Mineralisator für die Kalzinierung zu nutzen, d.h. als Mineralisatorhilfsmittel **2** dem Zerkeinerungsschritt **1** (vgl. **Fig.1** bis **6**) zuzuführen. Dies würde in vorteilhafter Weise eine partiell oder vollständig autarke Mineralisatorversorgung der Kalzinierung ermöglichen.

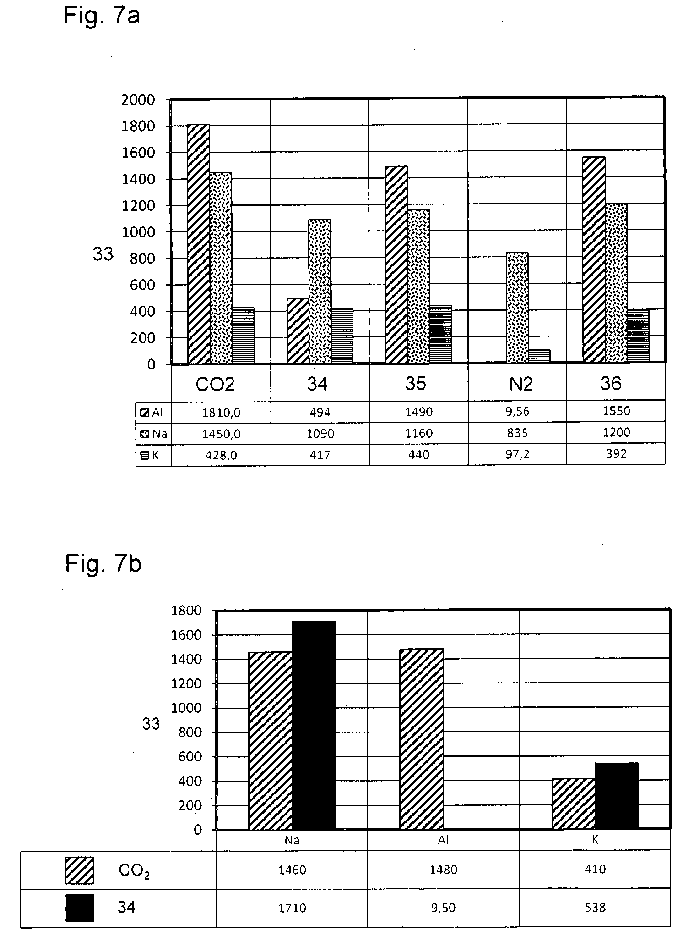

**Fig.7a** und **b** zeigen jeweils in graphischer Darstellung den Einfluss der Gasatmosphäre während der Kalzinierung **5** (vgl. **Fig.1** bis **6**) bei 1000°C auf die anschließende erste Elution **8** von Aluminium, Natrium und Kalium bei 22°C **(****Fig.7a****)** und 70°C **(****Fig.7b****).** Die Elution wurde mit Wasser bei einem Wasser zu Feststoffverhältnis W/F von 10 zu 1 durchgeführt. Als Mineralisator bei der Kalzinierung wurde 5% Na₂CO₃ der Einsatzstoffmischung (Basalt/Kalkstein 2 mit Ca/Si=2, vgl. **Tab.2 und 3**) zugegeben. Aufgetragen sind in **Fig.7a** die Elementkonzentrationen in der wässrigen Lösung (Elution in mg/l **33**) von Aluminium, Natrium und Kalium für verschiedene Kalzinierungsgasatmosphären (Kohlendioxid CO₂, Luft **34,** Gasgemisch aus 90% CO₂ und 10% O₂ **35,** Stickstoff N₂, CO₂ Atmosphäre bei der Kalzinierung einer Einsatzstoffmischung, die mit 1% Kohlenstoffzugabe vermischt wurde **36**) sowie in **Fig.7b** die Eluatkonzentration für die gelösten Elemente Natrium, Aluminium und Kalium für unterschiedliche Atmosphären aus der vorangegangenen Kalzinierung (Kohlendioxid CO₂, Luft **34**).

Eine Kalzinierung unter einer CO₂-Atmosphäre ermöglicht bei beiden Elutionstemperaturen eine hohe Elution insbesondere von Aluminium und Natrium (vgl. **Fig.7a** **und b**). Es bestätigt sich, dass eine Kalzinierung in einer Gasatmosphäre mit einem CO₂-Partialdruck zwischen 0,05 und 0,2MPa bei 850 bis 1100°C vorteilhaft ist.

In einer Luftatmosphäre ist gegenüber CO₂ eine signifikante Abnahme der Aluminium-Elution zu beobachten, die bei Aluminium bei erhöhter Elutionstemperatur (70°C **Fig.7b**) besonders deutlich ausfällt.

**Fig.7a** zeigt zudem die Einflüsse einer Kalzinierung unter Sauerstoffzugabe zur CO₂-Atmosphäre - und einer Kohlenstoffzugabe zur Einsatzstoffmischung sowie unter Stickstoff:
- Mit einer Zugabe von Sauerstoff in die CO₂-Atmosphäre verschlechtert sich die Elutionsausbeute von Aluminium leicht, verhindert aber eine Reduktion von Sulfaten und Bildung von Kohlenmonoxid bei der Kalzinierung. Sauerstoff reduziert in vorteilhafter Weise eine Freisetzung von Kohlenmonoxid und Schwefeldioxid bei der Kalzinierung von Kohlenstoff- und/oder Schwefelhaltigen Roh- und Reststoffen.
- Unter Stickstoff als Gasatmosphäre kommt eine anschließende Elution von Aluminium praktisch zum Erliegen.
- Eine geringe Kohlenstoffkonzentration (z.B. unverbrannter Kohlenstoff in Aschen) mindert geringfügig die Elution von Aluminium (Kohlenstoff wird über Boudouard-Reaktion mit CO₂ zu Kohlenmonoxid umgesetzt oder bei Sauerstoffanwesenheit in der Kalzinierungsatmospäre über Oxidation mit Sauerstoff zu Kohlen-dioxid abgebaut).

**Fig.8a** zeigt die Elutionsrate von Aluminium **37** [in %] bei der ersten Elution (Stoffmischung Granit/Kalkstein2, C/S=2, mit 5% Na₂CO₃ als Mineralisator, Kalzinierungsatmosphäre CO₂) bei einer Elutionstemperatur von 40°C mit Wasser (W/F=10)in Abhängigkeit der Kalzinierungstemperatur **38** [°C] der vorangegangenen Kalzinierung. Die höchste Al-Elution erfolgt bei einer Kalzinierungstemperatur von 950 bis 1050°C, während bei einen weiteren Temperaturerhöhung über 1050°C die Al-Elution wieder sinkt (vgl. **Fig.8a**).

**Fig.8b** zeigt dieselbe Elutionssrate von Aluminium **37** [%] über drei mögliche Elutionslösungen **40** (Wasser, wässrige Natrium-hydroxidlösung, wässrige Natriumcarbonatlösung). Wie erkennbar steigt die Elutionsrate bei der Elution mit einer Alkalihydroxidlösung und einer Alkalicarbonathaltigen Lösung.

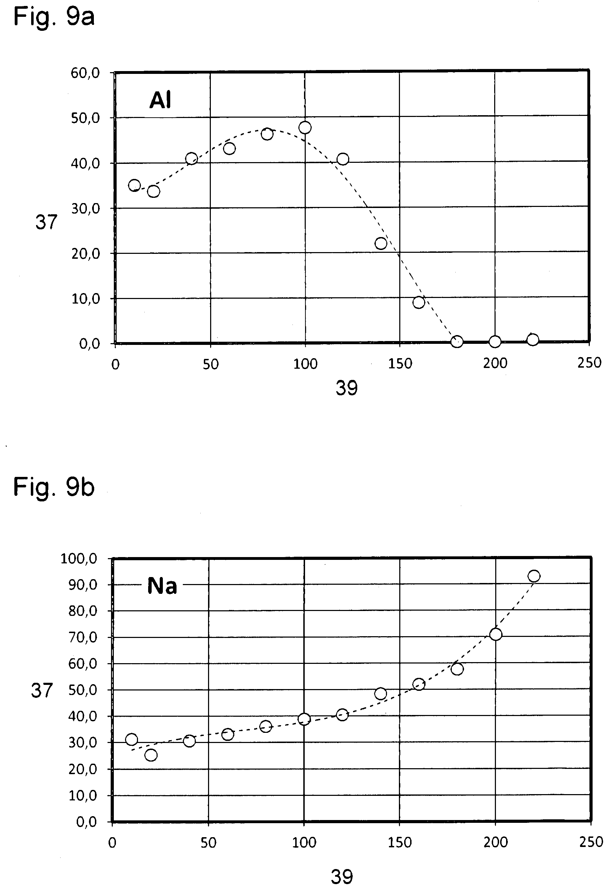

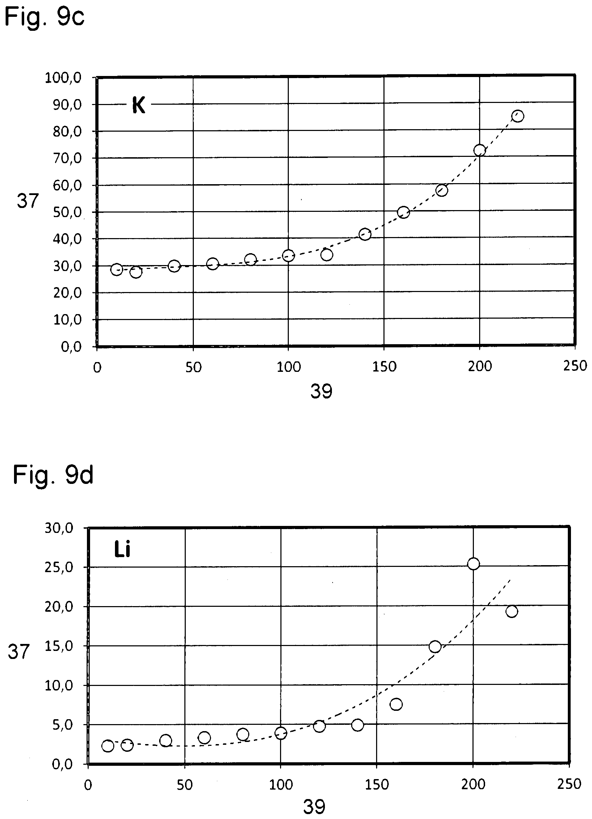

**Fig.9a** bis **d** sind die Elutionsraten (Elution **37** in [%]) von Aluminium **(****Fig.9a****),** Natrium **(****Fig.9b****),** Kalium **(****Fig.9c****)** und Lithium **(****Fig.9d****)** in Abhängigkeit der Elutionstemperatur **39** zwischen 0 und 250°C (Elution mit Wasser in [°C]) dargestellt. Die vorangegangene Kalzinierung erfolgte mit einer Granit/Kalkstein 2 (vgl. **Tab.2 und 3**) Mischung im Verhältnis Ca/Si =2, mit 5% Na₂CO₃ als Mineralisator bei 1000°C für 120 Minuten unter CO₂ Atmosphäre. Die Elutionsrate **37** für Aluminium steigt zunächst mit zunehmender Temperatur auf ein Maximum (knapp 50%) bei etwa 100°C und fällt bei weiterer Temperaturerhöhung rapide ab und kommt oberhalb von ca. 180°C praktisch vollständig zum Erliegen **(****Fig.9a****).** Im Gegensatz dazu steigt die Elutionsrate für Natrium, Kalium und Lithium kontinuierlich mit zunehmender Elutionstemperatur. Insbesondere bei Natrium und Kalium findet bei Temperaturen oberhalb von 200°C eine fast vollständige Abtrennung (über 85%, **Fig.9b** **und c**) statt.

**Tab.3: ausgewählte Beispiele für verschiedene Einsatzstoffmischungen**

| Si-reicher Einsatzstoff | | Granit | Basalt | Steinkohle | Bims | Kupferschlacke |
|---|---|---|---|---|---|---|
| Ca-reicher Einsatzstoff | | Kalkstein 2 | Kalkstein 2 | Kalkstein 2 | Kalkstein 2 | Kalkstein 2 |
| Mineralisator | | Na2CO3 | Na2CO3 | Na2CO3 | Na2CO3 | Na2CO3 |
| Ca/Si | mol/mol | 1.9 | 2.3 | 2.2 | 2.5 | 2.0 |
| (Na+K)/Al | mol/mol | 1.5 | 1.3 | 1.4 | 1.5 | 1.2 |
| Kalzinierungstemperatur | °C | 1000 | 1000 | 1000 | 1000 | 1000 |
| Kalzinierungsatmosphäre | | CO2 | CO2 | CO2 | CO2 | CO2 |
| Kalzinierungszeit | min | 120 | 120 | 120 | 120 | 120 |
| Elutionstemperatur | °C | 40 | 40 | 40 | 40 | 40 |
| Elutionsmittel | | Wasser | Wasser | Wasser | Wasser | Wasser, |
| Wasser zu Feststoff | g/g | 10 | 10 | 10 | 10 | 10 |
| Al-Elutionsrate | % | 41.0 | 49.7 | 69.7 | 72.0 | 28.6 |

Die erzielbare Al-Elutionsrate hängt von vielen Parametern ab die sich in ihren Wirkung gegenseitig beeinflussen.

Umfangreiche Untersuchungen ergaben zusammenfassend:
- Mit zunehmenden (Na+K)/Al Verhältnis im Kalzinierungsprodukt steigt die Al-Elutionsrate.
- Eine Minderung des Wasser zu Feststoffverhältnisses (W/F=2 bis 10) bei der Elution (T=40°C) hat geringen Einfluss.
- Der Einfluss der Elutionszeit (bei T=40°C) im Bereich 30min bis 480min auf die Al-Elutionsrate ist gering.
- Alkalihydroxid- und insbesondere Alkalicarbonatlösungen verbessern die Al-Elutionsrate im Vergleich zu Wasser.
- Die Selektivität der Al-Elution ist beim Einsatz einer Alkalicarbonatlösung deutlich besser als mit einer Alkalihydroxidlösung.
- Beim Einsatz einer Alkalicarbonatlösung oder einer Alkalihydroxidlösung für die Al-Elution werden im Bereich 20 bis 60°C die höchsten Ausbeuten erzielt.
- Ein Ca/Si Verhältnis in der Einsatzmischung im Bereich von 1.8 bis 2.5 zeigt bei der Elution mit Alkalihydroxid- und insbesondere mit Alkalicarbonatlösungen die besten Ergebnisse für die Al-Elution.
- Natriumcarbonat, Kaliumcarbonat oder deren Mischungen als Mineralisator bei der Kalzinierung erzielen bei gleichem Molaren Verhältnis zu Al im Kalzinierungsprodukt vergleichbare Al-Elutionsraten.

### Literatur:

[1] DE 10 2012 107 022 B3
[2] Rayman V. et al; Technology for Chemical-Metallurgical Coal Ash Utilization, Energy & Fuels. 11 (1997) 761-773
[3] DE 10 2009 018 632 B4
[4] US 4 397 822 A

### Bezugszeichenliste

- 1: Mischungs- und Zerkleinerungsschritt
- 2: Mineralisatorhilfsmittel
- 3: Roh- und Reststoffe
- 4: Stoffmischung
- 5: Kalzinierung
- 6: CO₂-Freisetzung
- 7: kalziniertes Produkt
- •8: erste Elution
- 9: flüssiges Wasser
- 10: Alkali-Al(OH)₄-reiche Lösung
- 11: calciumsilikatreicher Feststoff
11a alkalihaltiger calciumsilikatreicher Feststoff
11b alkaliarmer calciumsilikatreicher Feststoff
- 12: Ausfällung
- 13: Aluminium-Hydroxid Al(OH)₃
- 14: Ausgeschiedene Lösung (Na, K, Li)₂CO₃ und/oder (Na, K, Li)OH
- 15: CO₂ oder CO₂-haltiges Gas
- 16: Anreicherungsrezyklierungskreislauf für die erste Elution
- 17: Überleitung
- 18: Zweite Elution
- 19: Flüssiges Wasser
- 20: Alkalihydroxidlösung (Na,K,Li)OH
- 21: Anreicherungsrezyklierungskreislauf für die zweite Elution
- 22: Rezyklierungsleitung
- 23: Carbonatisierung
- 24: CO₂ oder CO₂-haltiges Gas
- 25: alkalicarbonathaltige Lösung
- 26: Stufe für eine Sprühtrocknung und Carbonatisierung der Alkalihydroxid- und/oder Alkalikarbonatlösung
- 27: Rezyklierungsleitung
- 28: Alkalikarbonatpartikel
- 29: Ausleitung für CO₂
- 30: Carbonatisierung
- 31: CO₂-Zufuhr
- 32: Carbonathaltige Lösung (Na, K, Li)₂CO₃
- 33: Elution [mg/l]
- 34: Luft
- 35: Gasgemisch aus 90% CO₂ und 10% O₂
- 36: Einsatzstoffmischung vermischt mit 1% elementarem Kohlenstoff, Kalzinierung unter CO₂
- 37: Elutionssrate von Aluminium, Elution [%]
- 38: Kalzinierungstemperatur [°C]
- 39: Elutionstemperatur [°C]
- 40: Elutionsflüssigkeit

## Patentansprüche

1. Verfahren zur Abtrennung von Aluminium bei der Calciumsilikatproduktion aus Calcium-, Silizium- und Aluminiumhaltigen mineralischen Einsatzstoffen **(2, 3)** umfassend mineralische Roh- und Reststoffe **(3),** umfassend die folgenden Verfahrenschritte:
a) Zerkleinern und Mischen **(1)** der Einsatzstoffe mit Alkalicarbonaten umfassend Natrium- und/oder Kalium- und / oder Lithiumcarbonat zu einer Stoffmischung **(4),** wobei ein molares Verhältnis Calcium/Silizium zwischen 1/1 und 3/1 und ein molares Verhältnis Alkalimetall/Aluminium auf 1/1 bis 3/1 eingestellt wird und dabei die Konzentration von Alkalicarbonaten in der Stoffmischung mindestens 2 Gew.-% beträgt,
b) Kalzinierung **(5)** der Stoffmischung in einer Gasatmosphäre mit einem CO₂-Partialdruck zwischen 0,05 und 0,2MPa bei 850 bis 1050°C, wobei CO₂ **(6)** freigesetzt und ein kalziniertes Produkt **(7)** aus wasserunlöslichen Calciumsilikaten und wasserlöslichen Aluminiumverbindungen gebildet wird,
c) eine erste Elution **(8)** des kalzinierten Produkts mit flüssigem Wasser **(9)** oder einer flüssigen wässrigen Alkalihydroxid- und/oder Alkalicarbonatlösung im Temperaturbereich zwischen 0 und 100°C, wobei Aluminium als Alkali-Aluminate (Alkali-Al(OH)₄) in Lösung gehen,
d) Fest-Flüssigtrennung in eine Alkali-Al(OH)₄-reiche Lösung **(10)** und einen alkalihaltigen calciumsilikatreichen Feststoff **(11a)** sowie
e) Ausfällung **(12)** und Abtrennung von Aluminium-Hydroxid Al(OH)₃ **(13)** aus der Alkali-Al(OH)₄-reichen Lösung durch Zugabe von Impfkristallen und/oder durch Zugabe von CO₂ oder eines CO₂-haltigen Gases **(15),** wobei Alkalihydroxide und/oder Alkalicarbonate **(14)** gebildet werden und in der Lösung verbleiben.

2. Verfahren nach Anspruch 1, umfassend eine der ersten Elution nachfolgenden zweiten Elution **(18)** des alkalihaltigen calciumsilikatreichen Feststoffes **(11a)** mit flüssigem Wasser **(19)** oder einer wässrigen Alkalihydroxidlösung bei einer Temperatur zwischen 100 und 250°C, wobei Alkalien aus dem alkalihaltigen calciumsilikatreichen Feststoff als Hydroxide in Lösung gehen und sich eine Suspension aus alkaliarmen calciumsilikatreichen Feststoffs **(11b)** und einer alkalihydroxidreichen wässrigen Lösung **(20)** bildet.

3. Verfahren nach Anspruch 2, umfassend eine Temperierung der Suspension auf 0 bis 100°C und eine Fest-Flüssigtrennung zur Abtrennung der alkalihydroxidreichen wässrigen Lösung **(20)** und des alkaliarmen calciumsilikatreichen Feststoffs **(11b)**.

4. Verfahren nach Anspruch 2 oder 3, umfassend eine Einleitung der zwischen 0 und 100°C temperierten wässrigen Alkalihydroxidlösung **(20)** oder eines Teils desselben in die erste Elutionsstufe **(8).**

5. Verfahren nach einem der Ansprüche 3 bis 4, umfassend eine vollständige oder partielle Carbonatisierung **(30)** der abgetrennten Alkalihydroxid-reichen Lösung **(20)** oder eines Teils desselben mit CO₂ oder einem CO₂-haltigen Gas **(31)** zu einer alkalicarbonathaltigen Lösung **(14).**

6. Verfahren nach Anspruch 5, umfassend eine Einleitung der Alkalihydroxid- und/oder Alkalikarbonat-Lösung **(14)** oder eines Teils derselben in die erste Elution **(8).**

7. Verfahren nach einem der Ansprüche 4 bis 6, umfassend eine Sprühtrocknung und Carbonatisierung der Alkalihydroxid- und /oder Alkalikarbonatlösung **(26)** in einem CO₂-haltigen Gas, und Abscheidung von trockenen festen Alkalikarbonatpartikeln.

8. Verfahren nach Anspruch 7, umfassend eine teilweise oder vollständige Rezyklierung **(27)** der festen Alkalikarbonate **(28)** als Mineralisator **(2)** für die Kalzinierung **(5).**

9. Verfahren nach einem der vorgenannten Ansprüche, wobei das bei der Kalzinierung **(5)** gebildete CO₂ oder CO₂-haltige Gas zur Ausfällung **(12)** und/oder Carbonatisierung und/oder Sprühtrocknung **(26)** verwendet wird.

10. Verfahren nach einem der vorgenannten Ansprüche, umfassend jeweils Anreicherungsrezyklierungskreisläufe in der ersten und/oder zweiten Elution.

11. Verfahren nach einem der vorgenannten Ansprüche, **dadurch gekennzeichnet, dass** die mineralischen Calcium-haltigen Einsatzstoffe Calciumcarbonat-haltig sind.

12. Verfahren nach einem der vorgenannten Ansprüche, **dadurch gekennzeichnet, dass** die mineralischen Einsatzstoffe alkalihaltig sind.

13. Verfahren nach einem der vorgenannten Ansprüche, **dadurch gekennzeichnet, dass** die Gasatmosphäre bei der Kalzinierung einem O₂-Partialdruck von 0.0001 bis 0.02MPa aufweist.

14. Verwendung einer Vorrichtung zur Abtrennung von Aluminium bei der Calciumsilikatproduktion aus Calcium-, Silizium- und Aluminiumhaltigen mineralischen Einsatzstoffen umfassend mineralische Roh- und Reststoffe nach einem der vorgenannten Ansprüche, umfassend
a) einen Mischer und/oder Zerkleinerer **(1)** mit Zuführungen für die Roh- und Reststoffe **(3)** und einem Mineralisatorhilfmittel **(2)** und einer Ableitung für eine Stoffmischung **(4),**
b) einen dem Mischer und/oder Zerkleinerer **(1)** nachgeschalteten Kalzinierungsreaktor **(5)** mit einer Gasatmosphäre mit einem CO₂-Partialdruck zwischen 0,05 und 0,2MPa und die Stoffmischung sowie eine Ableitung für ein kalziniertes Produkt **(7)** und eine Ableitung für freigesetztes CO₂ **(6)** sowie
c) eine erste Elutionsstufe **(8)** mit je einer Zuleitung für das kalzinierte Produkt **(7)** und für flüssiges Wasser **(9)** oder eine flüssige wässrige Alkalihydroxid- und/ oder Alkalicarbonatlösung im Temperaturbereich zwischen 0 und 100°C sowie eine Ableitung für eine Aluminiumhaltige Lösung, wobei die erste Elutionsstufe Mittel für eine Fest-Flüssigtrennung der Aluminiumhaltigen Lösung **(10)** vom alkalihaltigen calciumsilikatreichen Feststoff **(11a)** umfasst.

15. Verwendung nach Anspruch 14, umfassend weiterhin eine der ersten Elutionsstufe **(8)** nachfolgenden zweiten Elutionsstufe **(18)** mit je einer Zuleitung für flüssiges Wasser oder einer wässrigen Alkalihydroxid-Lösung bei einer Temperatur zwischen 100 und 250°C und dem alkalihaltigen calciumsilikatreichen Feststoff und je einer Ableitung für eine Alkalihydroxidlösung **(20)** und einem verbleibenden alkaliarmen calciumsilikatreichen Feststoff **(11b).**

## Claims

1. Method for separating aluminium during calcium silicate production from mineral feed materials (2, 3) containing calcium, silicon, and aluminium, and comprising mineral raw materials and residual materials (3), and comprising the following method steps:
a) comminution and mixing (1) of the feed materials with alkali carbonates, comprising sodium carbonate and/or potassium carbonate and/or lithium carbonate, to form a material mixture (4), wherein a molar ratio is adjusted of calcium/silicon of between 1/1 and 3/1 and a molar ratio of alkali/aluminium of 1/1 to 3/1, and thereby the concentration of alkali carbonates in the material mixture amounts to at least 2% by weight,
b) calcination (5) of the material mixture in a gas atmosphere with a CO₂ partial pressure of between 0.05 and 0.2 MPa at 850 to 1050 °C, wherein CO₂ (6) is released and a calcined product (7) consisting of water-insoluble calcium silicates and water-soluble aluminium compounds is formed,
c) a first elution (8) of the calcined product with liquid water (9) or a fluid aqueous alkali hydroxide solution and/or alkali carbonate solution at temperatures of between 0 and 100 °C, wherein aluminium in the form of alkali-aluminates (alkali-AI (OH)₄) goes into solution,
d) solid/liquid separation into a solution (10) rich in alkali-AI (OH)₄ and an alkali-containing solid (11a) rich in calcium silicate, and
e) precipitation (12) and separation of aluminium-hydroxide Al(OH)₃ (13) from the solution rich in alkali-AI (OH)₄ by the addition of seed crystals and/or by the addition of CO₂ or a gas (15) containing CO₂, wherein alkali hydroxides and/or alkali carbonates (14) are formed and remain in the solution.

2. Method according to claim 1, comprising a second elution (18), following the first elution, of the alkali-containing solid (11a) rich in calcium silicate with liquid water (19) or an aqueous alkali hydroxide solution at a temperature of between 100 and 250°C, wherein alkalis from the alkali-containing solid rich in calcium silicate go into solution as hydroxides, and a suspension of alkali-containing solid (11b) rich in calcium silicate and an aqueous solution (20) rich in alkali hydroxide are formed.

3. Method according to claim 2, comprising temperature adjustment of the suspension to 0 to 100 °C and a solid-liquid separation for the separation of the aqueous solution (20) rich in alkali hydroxide and the low-alkali solid (11b) rich in calcium silicate.

4. Method according to claim 2 or 3, comprising the introduction of the aqueous alkali hydroxide solution (20), temperature-adjusted to between 0 and 100 °C, or a part thereof, into the first elution step (8).

5. Method according to one of claims 3 to 4, comprising a complete or partial carbonatising (30) of the separated solution (20) rich in alkali-hydroxide, or a part thereof, with CO₂ or a gas (31) containing CO₂ to form a solution (14) rich in alkali carbonate.

6. Method according to claim 5, comprising the introduction of the alkali hydroxide solution and/or alkali carbonate solution (14), or a part thereof, into the first elution (8).

7. Method according to any one of claims 4 to 6, comprising a spray drying and carbonatising of the alkali hydroxide solution and/or alkali carbonate solution (26) in a gas containing CO₂, and separation of dry solid alkali carbonate particles.

8. Method according to claim 7, comprising a partial or complete recycling (27) of the solid alkali carbonates (28) as mineralising agent (2) for the calcination (5).

9. Method according to any one of the preceding claims, wherein the CO₂ or gas containing CO₂ formed during the calcination (5) is used for the precipitation (12) and/or carbonatising and/or spray drying (26).

10. Method according to any one of the preceding claims, comprising in each case enrichment recycling circuits in the first and/or second elution.

11. Method according to any one of the preceding claims, **characterised in that** the mineral calcium-containing feed materials contain calcium carbonate.

12. Method according to any one of the preceding claims, **characterised in that** the mineral feed materials contain alkali.

13. Method according to any one of the preceding claims, **characterised in that** the gas atmosphere during the calcining exhibits an O₂ partial pressure from 0.0001 to 0.02 MPa.

14. Use of a device for separating aluminium during calcium silicate production from mineral feed materials containing calcium, silicon, and aluminium, and comprising mineral raw materials and residual materials in accordance with any one of the preceding claims, comprising
a) a mixer and/or comminutor (1) with infeeds for the raw materials and residual materials (3) and a mineralising auxiliary agent (2) and a discharge outlet for a substance mixture (4).
b) a calcining reactor (5), downstream of the mixer and/or comminutor (1), with a gas atmosphere with a CO₂ partial pressure of between 0.05 and 0.2 MPa, and the substance mixture, as well as a discharge outlet for a calcined product (7) and a discharge outlet for released CO₂ (6), and
c) a first elution step (8), with in each case an infeed for the calcined product (7) and for liquid water (9) or a fluid aqueous alkali hydroxide solution and/or alkali carbonate solution in the temperature range of between 0 and 100 °C, as well as a discharge outlet for a solution containing aluminium, wherein the first elution step comprises means for a solid-fluid separation of the solution (10) containing aluminium from the alkali-containing solid (11a) rich in calcium silicate.

15. Use according to claim 14, further comprising a second elution step (18) following the first elution step (8), with in each case an infeed for liquid water or an aqueous alkali hydroxide solution at a temperature of between at 100 and 250 °C and the alkali-containing solid rich in calcium silicate, and in each case with a discharge outlet for an alkali hydroxide solution (20) and for a low-alkali solid (11b) rich in calcium silicate.

## Revendications

1. Procédé de séparation de l'aluminium lors de la production de silicate de calcium, à partir de matières minérales à traiter (2, 3) renfermant du calcium du silicium et de l'aluminium, renfermant des matières minérales brutes et résiduaires (3),
comprenant les étapes de procédé suivantes consistant à :
a) broyer et mélanger (1) les matières à traiter avec des carbonates alcalins renfermant du carbonate de sodium et/ou de potassium et/ou de lithium pour obtenir un mélange de matières (4), le rapport molaire, calcium/silicium étant réglé entre 1/1 et 3/1 et le rapport molaire, métal alcalin/aluminium étant réglé entre 1/1 et 3/1, et la concentration de carbonates alcalins dans le mélange de matières étant ainsi égal à au moins 2% en poids,
b) calciner (5) le mélange de matières sous une atmosphère gazeuse avec une pression partielle de CO₂ comprise entre 0,05 et 0,2Mpa à une température de 850 à 1050°C, le CO₂ (6) étant libéré et un produit calciné (7) constitué de silicates de calcium insolubles dans l'eau et de composés d'aluminium solubles dans l'eau étant formé,
c) effectuer une première élution (8) du produit calciné avec de l'eau liquide (9) ou une solution aqueuse liquide d'hydroxyde alcalin et/ou de carbonate alcalin dans une plage de températures comprise entre 0 et 100°, l'aluminium passant dans la solution sous la forme d'aluminate alcalin métal (alcalin-Al (OH)₄),
d) séparation liquide solide en une solution (10) riche en métal alcalin-Al(OH)₄ et un solide riche en silicate de calcium renfermant des métaux alcalins (11a), et
e) précipitation (12) et séparation d'hydroxyde d'aluminium Al(OH)₃ (13) de la solution riche en métal alcalin-Al(OH)₄ par addition de cristaux d'inoculation et/ou par addition de CO₂ ou d'un gaz renfermant du Co₂(15), des hydroxydes alcalins et/ou des carbonates alcalins (14) étant formés et restante en solution.

2. Procédé conforme à la revendication 1,
comprenant une seconde élution (18) suivant la première élution du solide riche en silicate de calcium renfermant des métaux alcalins (11a) avec de l'eau liquide (19) ou une solution aqueuse d'hydroxyde alcalin à une température comprise entre 100 et 250°C, les métaux alcalins provenant du solide riche en silicate de calcium renfermant des métaux alcalins passant en solution sous la forme d'hydroxydes, et une suspension de solide riche en silicate de calcium et pauvre en métaux alcalins (11b) et une solution aqueuse (20) riche en hydroxyde alcalin se formant.

3. Procédé conforme à la revendication 2,
comprenant une mise en température de la suspension à 0 à 100°C et une séparation solide-liquide pour séparer la solution aqueuse riche en hydroxyde alcalin (20) et le solide riche en silicate de calcium et pauvre en métaux alcalins (11b).

4. Procédé conforme à la revendication 2 ou 3,
comprenant un transfert de la solution aqueuse d'hydroxyde alcalin mise à température entre 0 à 100°C (20) ou une partie de celle-ci dans la première étape élution (8).

5. Procédé conforme à l'une des revendications 3 et 4,
comprenant une carbonatation totale ou partielle (30) de la solution riche en hydroxyde alcalin séparée (20) ou d'une partie de celle-ci avec du CO₂ ou un gaz renfermant du CO₂ (31) pour obtenir une solution renfermant un carbonate alcalin (14).

6. Procédé conforme à la revendication 2,
comprenant un transfert de la solution d'hydroxyde alcalin et/ou de carbonate alcalin (14) ou d'une partie de celle-ci dans la première élution (8).

7. Procédé conforme à l'une des revendications 4 à 6,
comprenant un séchage par pulvérisation et une carbonatation de la solution d'hydroxyde alcalin et/ou de carbonate alcalin (26) dans un gaz renfermant du CO₂ et une séparation de particules de carbonate alcalin solides sèches.

8. Procédé conforme à la revendication 7,
comprenant un recyclage partiel ou total (27) du carbonate alcalin solide (28) en tant qu'agent de minéralisation (2) pour la calcination (5).

9. Procédé conforme à l'une des revendications précédentes,
selon lequel le CO₂ ou le gaz renfermant du CO₂ formé lors de la calcination (5) est utilisé pour la précipitation (12) et/ou la carbonatation et/ou le séchage par pulvérisation (26).

10. Procédé conforme à l'une des revendications précédentes,
comprenant respectivement des circuits de recyclage et d'enrichissement dans la première et/ou dans la seconde élution.

11. Procédé conforme à l'une des revendications précédentes,
**caractérisé en ce que**
les matières minérales à traiter renfermant du calcium renferment du carbonate de calcium.

12. Procédé conforme à la l'une des revendications précédentes,
**caractérisé en ce que**
les matières minérales à traiter renferment un métal alcalin.

13. Procédé conforme à l'une des revendications précédentes,
**caractérisé en ce que**
lors la calcination l'atmosphère gazeuse présente une pression partielle en CO₂ située dans la plage de 0,0001 à 0,02MPa.

14. Utilisation d'un dispositif de séparation de l'aluminium lors de la production de silicate de calcium à partir de matières minérales à traiter, renfermant du calcium, du silicium et de l'aluminium renfermant des matières minérales brutes et résiduelles conforment à l'une des revendications précédentes comprenant :
a) un mélangeur et/ou un broyeur (1) avec des organes d'alimentation des matières brutes et résiduelles (3) et d'un auxiliaire de minéralisation (2) et une conduite d'évacuation un mélange de matières (4),
b) un réacteur de calcination (5) monté en aval du mélangeur et/ou du broyeur (1) ayant une atmosphère gazeuse avec une pression partielle de CO₂ située dans la plage 0,05 à 0,2MPa, et renfermant le mélange de matières ainsi qu'une conduite d'évacuation d'un produit calciné (7) et une conduite d'évacuation du CO₂ libéré (6), et
c) un premier étage élution (8) comprenant respectivement une conduite d'alimentation du produit calciné (7) et d'eau liquide (9) ou d'une solution aqueuse liquide d'hydroxyde alcalin et/ou de carbonate alcalin dans une plage de température comprise entre 0 et 100°C ainsi qu'une conduite d'évacuation d'une solution renfermant de l'aluminium, le premier étage d'élution comprenant des moyens pour permettre une séparation solide-liquide de la solution renfermant de l'aluminium (10) d'un solide riche en silicate de calcium renfermant un métal alcalin (11a).

15. Utilisation conforme à la revendication 14,
comprenant en outre un second étage d'élution (18) situé en aval du premier étage d'élution (8) comprenant respectivement une conduite d'alimentation d'eau liquide ou d'une solution aqueuse d'hydroxyde alcalin à une température comprise entre 100 et 250°C et du solide riche en silicate de calcium renfermant un métal alcalin, et respectivement une conduite d'évacuation d'une solution d'hydroxyde alcalin (20) et d'un solide riche en silicate de calcium et pauvre en métaux alcalins (11b) restant.
